# EUROPEAN PATENT APPLICATION

(11) **EP 4 489 471 A1**
(43) Date of publication of application: **08.01.2025**
(21) Application number: 24184376.2
(22) Date of filing: 25.06.2024
(51) Int. Cl.: H04W 28/02, H04W 72/21

(54) **BUFFER STATUS REPORT METHOD AND USER EQUIPMENT**

(30) Priority: 05.07.2023 US 202363525132 P; 06.06.2024 US 202418736478
(71) Applicant: Industrial Technology Research Institute, 310401 Hsinchu (TW)
(72) Inventor: Tsai, Tzu-Jane, 302 Zhubei City, Hsinchu County (TW); Chiu, Chun-Yuan, 900 Pingtung City, Pingtung County (TW)
(74) Representative: Kurig, Thomas

(57) **Abstract**

A BSR method, adapted for UE(120) is provided, including: receiving one or more preset configurations of one or more Buffer Size Tables (BSTs) from a network device(110), wherein the one or more BSTs are candidate BSTs to be selected as the target BST to the LCG; and in response to identifying the target BST used for the LCG, signalling an advanced BST indication to the network device(110), wherein the advanced BST indication is configured to record an advanced BST index and at least one of following information: a target LCID, and a target eLCID, wherein the network device(110) queries a target Buffer Size (BS) range in the target BST according to the received advanced BST indication, and the network device(110) grants a UL resource for the LCG based on the target BS range, wherein the target BS range is identified by a BS index of the target BST.

## Description

### BACKGROUND

### Technical Field

The present disclosure generally relates to a buffer status report method and user equipment.

### Description of Related Art

In communication systems, when the user equipment (UE) wants to send data to the network device (ND), it must first obtain the allocation of uplink radio resources. In order for the ND to allocate radio resources according to the data demand of the UE, the UE needs to perform buffer status report (BSR) of the logical channel group (LCG) to the ND, that is, the buffer size of each logical channel group. The BSR mechanism is a feedback mechanism for uplink resource allocation, which can improve the efficiency and fairness of the system. However, with the development of communication systems, the growth of data volume and the coexistence of multiple users, especially for the transmission of XR services, the BSR mechanism faces many challenges, such as frequent transmission of BSR, inaccuracy of BSR, delay of BSR, etc. These problems will affect the allocation effect of radio resources, and reduce the performance of the system.

### SUMMARY

Exemplary embodiments of the disclosure provide a buffer status report method and a user equipment (UE).

According to one or more exemplary embodiments of the disclosure, a Buffer Size Reporting (BSR) method, adapted for a user equipment (UE) of a network for informing a network device of the network a target Buffer Size Table (BST) used for a Logical Channel Group (LCG) is provided. The method comprises: receiving, by the UE, one or more preset configurations of one or more BSTs from the network device, wherein the one or more BSTs are candidate BSTs to be selected as the target BST to the LCG; and in response to identifying the target BST used for the LCG, signalling, by the UE, an advanced BST indication to the network device, wherein the advanced BST indication is configured to record an advanced BST index and at least one of following information: a target LCID, a target eLCID, wherein the network device queries a target Buffer Size (BS) range from a plurality of BS ranges in the target BST according to the received advanced BST indication, and the network device grants a upload link (UL) resource for the LCG based on the target BS range, wherein the target BST is identified by the advanced BST index of the received advanced BST indication and the target BS range is identified by a BS index of the target BST.

According to one or more exemplary embodiments of the disclosure, a UE comprises a transceiver, a memory, and a processor. The transceiver is used for transmitting or receiving signals. The memory is used for storing a program code. The processor is coupled to the transceiver and the memory. The processor is configured for executing the program to implement a Buffer Size Reporting (BSR) method for informing a network device of the network a target Buffer Size Table (BST) used for a Logical Channel Group (LCG), and the BSR method comprises: receiving one or more preset configurations of one or more BSTs from the network device, wherein the one or more BSTs are candidate BSTs to be selected as the target BST to the LCG; and in response to identifying the target BST used for the LCG, signalling an advanced BST indication to the network device, wherein the advanced BST indication is configured to record an advanced BST index and at least one of following information: a target LCID, a target eLCID, wherein the network device queries a target Buffer Size (BS) range from a plurality of BS ranges in the target BST according to the received advanced BST indication, and the network device grants a upload link (UL) resource for the LCG based on the target BS range, wherein the target BST is identified by the advanced BST index of the received advanced BST indication and the target BS range is identified by a BS index of the target BST.

In summary, the buffer status report method and the user equipment provided by the embodiments of the present disclosure are capable of: performing BSR by the provided advanced BST indication to the network device, so as to accurately informing one or more demand buffer sizes for UL resources for one or more particular LCGs. Such that, uplink resources will be allocated by the network device more efficiently and the adaptability and sensitivity of the network system will be improved.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates a communication system according to an exemplary embodiment of the present disclosure.
FIG. 2 is a block diagram that illustrates a communication device according to an exemplary embodiment of the present disclosure.
FIG. 3 is a schematic diagram that illustrates performing BSR for UL data.
FIG. 4A is a schematic diagram that illustrates BSR procedure according to an exemplary embodiment of the present disclosure.
FIG. 4B is a flow chart of BSR method shown according to an exemplary embodiment of the present disclosure.
FIG. 5 is a schematic diagram that illustrates a Buffer Size Table (BST) indication for short BSR.
FIG. 6 is a schematic diagram that illustrates a BST indication for long BSR.
FIG. 7 is a schematic diagram that illustrates UL MAC PDU.
FIG. 8 is a schematic diagram that illustrates values of LCID for UL-SCH.
FIG. 9 is a schematic diagram that illustrates values of one-octet eLCID for UL-SCH.
FIG. 10 is a schematic diagram that illustrates a Buffer Size table for 5-bits Buffer Size Index.
FIG. 11 is a schematic diagram that illustrates a Buffer Size table for 8-bits Buffer Size Index.
FIG. 12 is a schematic diagram that illustrates an advanced BST indication for short BSR according to an exemplary embodiment of the present disclosure.
FIG. 13 is a schematic diagram that illustrates an advanced BST indication for short BSR according to an exemplary embodiment of the present disclosure.
FIG. 14 is a schematic diagram that illustrates an advanced BST indication for short BSR according to an exemplary embodiment of the present disclosure.
FIG. 15 is a schematic diagram that illustrates an advanced BST indication for short BSR according to an exemplary embodiment of the present disclosure.
FIG. 16 is a schematic diagram that illustrates an advanced BST indication for long BSR according to an exemplary embodiment of the present disclosure.
FIG. 17 is a schematic diagram that illustrates an advanced BST indication for long BSR according to an exemplary embodiment of the present disclosure.
FIG. 18 is a schematic diagram that illustrates an advanced BST indication for short BSR according to an exemplary embodiment of the present disclosure.
FIG. 19 is a schematic diagram that illustrates an advanced BST indication for short BSR according to an exemplary embodiment of the present disclosure.
FIG. 20 is a schematic diagram that illustrates an advanced BST indication for long BSR according to an exemplary embodiment of the present disclosure.
FIG. 21 is a schematic diagram that illustrates an advanced BST indication for short BSR according to an exemplary embodiment of the present disclosure.
FIG. 22 is a schematic diagram that illustrates an advanced BST indication for short BSR according to an exemplary embodiment of the present disclosure.
FIG. 23 is a schematic diagram that illustrates an advanced BST indication for long BSR according to an exemplary embodiment of the present disclosure.
FIG. 24 is a schematic diagram that illustrates an advanced BST indication for long BSR according to an exemplary embodiment of the present disclosure.
FIG. 25 is a schematic diagram that illustrates an advanced BST indication for long BSR according to an exemplary embodiment of the present disclosure.
FIG. 26 is a schematic diagram that illustrates an advanced BST indication for long BSR according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| Abbreviation | Full name |
|---|---|
| AN | Access Network |
| BS | Buffer Size |
| BST | Buffer Size Table |
| BSR | Buffer Status Reporting |
| CE | Control Element |
| CN | Core Network |
| DL | Downlink |
| DN | Data Network |
| DRB | Data Radio Bearer |
| LCG | Logical Channel Group |
| LCID | Logical Channel identification |
| eLCID | extended Logical Channel identification |
| MAC | Medium Access Control |
| MAC CE | MAC Control Element |
| NG | Next Generation |
| NGAP | NG Application Protocol |
| PDCP | Packet Data Convergence Protocol |
| PDU | Protocol Data Unit |
| QoS | Quality of Service |
| RAN | Radio Access Network |
| RLC | Radio Link Control |
| RLF | Radio Link Failure |
| RRC | Radio Resource Control |
| SDU | Service Data Unit |
| UE | User Equipment |
| UL | Uplink |
| UL-SCH | Uplink shared channel |
| XR | Extended Reality |

Some related technologies are introduced first.

"Configured" in this disclosure may be default/predefined/fixed/configured/activated/indicated/set, ..., but not limited herein.

RRC in this disclosure may be replaced by MAC CE, DCI, ..., but not limited herein.

Communication device in this disclosure may be represented by UE, or gNodeB, but not limited herein.

Network device in this disclosure may be represented by gNodeB (gNB), NG-RAN or base station, but not limited herein.

Combinations of embodiments disclosed in this disclosure is not precluded.

All steps in the embodiment may not be performed in a step-by-step way.

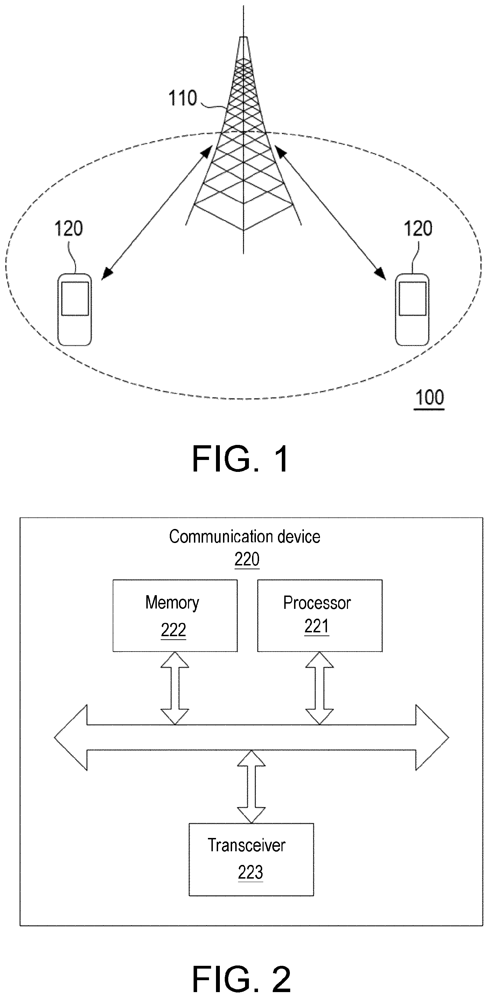

FIG. 1 is a schematic diagram that illustrates a communication system according to an exemplary embodiment of the present disclosure. Referring to FIG. 1, a communication system 100 (e.g., a Long Term Evolution (LTE) system, an LTE-Advanced (LTE-A) system, an LTE-Advanced Pro system, or a 5G NR Radio Access Network (RAN)) typically includes one or more network devices 110 and one or more UEs 120. The UE 120 communicates with the network (e.g., a Core Network (CN), an Evolved Packet Core (EPC) network, an Evolved Universal Terrestrial Radio Access network (E-UTRAN), a 5G Core (5GC), or an internet), through a RAN established by one or more network devices 110.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A network device (or called base station, an NW device, or NW) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The network device may connect to serve the one or more UEs through a radio interface to the network.

The network device may be operable to provide radio coverage to a specific geographical area using a plurality of cells included in the RAN. The network device may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The network device may communicate with one or more UEs in the radio communication system through the plurality of cells.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

FIG. 2 is a block diagram that illustrates a communication device according to an exemplary embodiment of the present disclosure. Referring to FIG. 2, the communication device 220 may be a UE or a network device. The communication device 220 may include, but is not limited thereto a processor 221. The processor 221 (e.g., having processing circuitry) may include an intelligent hardware device, e.g., a Central Processing Unit (CPU), a microcontroller, an ASIC, and etc. The processor 221 can call and run a computer program from a memory to implement the method in the embodiment of the disclosure.

Since the program code stored in the communication device 220 adopts all the technical solutions of all the foregoing embodiments when being executed by the processor 221, it at least has all the advantageous effects brought by all the technical solutions of all the foregoing embodiments, and no further description is incorporated herein.

Optionally, as shown in FIG. 2, the communication device 220 may further include a memory 222. The memory 222 may include computer-storage media in the form of volatile and/or non-volatile memory. The memory 220 may be removable, non-removable, or a combination thereof. Exemplary memory includes solid-state memory, hard drives, optical-disc drives, and etc. The processor 221 may call and run a computer program from the memory 222 to implement the method in the embodiment of the disclosure.

The memory 222 may be a separate device independent of the processor 221, or may be integrated in the processor 221.

Optionally, as shown in FIG. 2, the communication device 220 may further include a transceiver 223, and the processor 221 may control the transceiver 223 to communicate with other devices. The transceiver 220 having a transmitter (e.g., transmitting/transmission circuitry) and a receiver (e.g., receiving/reception circuitry) may be configured to transmit and/or receive time and/or frequency resource partitioning information. In some implementations, the transceiver 3500 may be configured to transmit in different types of sub-frames and slots including, but not limited to, usable, non-usable and flexibly usable sub-frames and slot formats. The transceiver 223 may be configured to receive data and control channels.

Specifically, the transceiver 223 may send information or data to other devices, or receive information or data sent by other devices.

Specifically, the transceiver 223 may include a transmitter and a receiver. The transceiver 3530 may further include an antenna, and the number of antennas may be one or more.

Optionally, the communication device 220 may specifically be a network device in an embodiment of the disclosure, and the communication device 220 may implement the corresponding process implemented by the network device in various methods of the embodiment of the disclosure. For the conciseness, related descriptions are omitted.

Optionally, the communication device 220 may specifically be a mobile terminal, a terminal device, or a UE in an embodiment of the disclosure, and the communication device 220 may implement the corresponding process implemented by the mobile terminal, the terminal device, or the UE in various methods in the embodiment of the disclosure. For conciseness, related description is omitted.

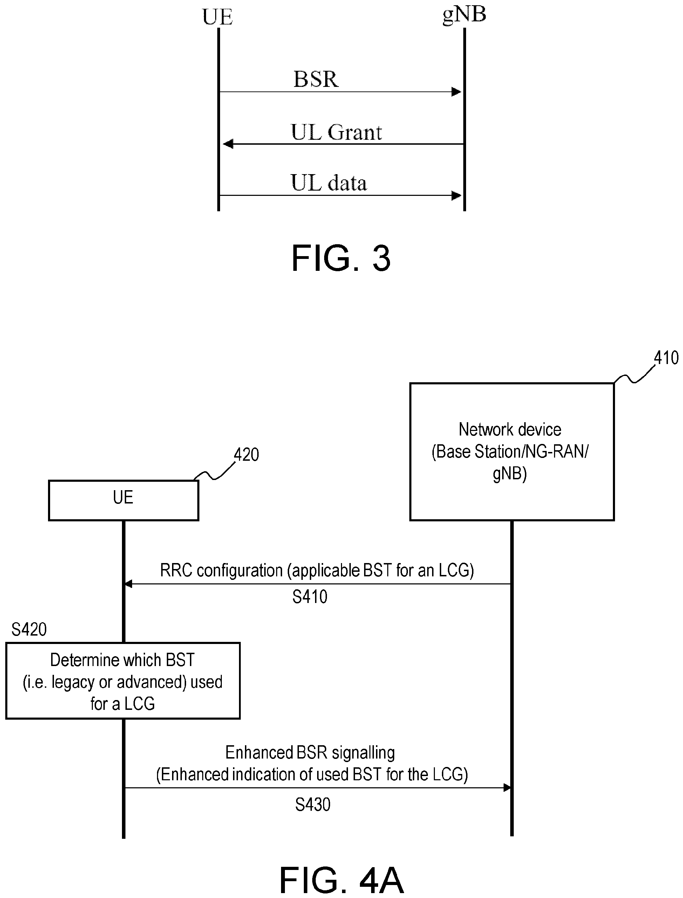

FIG. 3 is a schematic diagram that illustrates performing BSR for UL data. Referring to FIG. 3, the Buffer Status Reporting (BSR) procedure is a mechanism within the Medium Access Control (MAC) entity that communicates the volume of uplink (UL) data awaiting transmission from a User Equipment (UE) to the serving gNB (or a network device). When UE has data ready to send, it informs the gNB of the amount of data (e.g., buffer size) it needs to transmit using BSR. The gNB then responds, after identifying a corresponding buffer size for the UL data according to the received BSR, with an Uplink Grant (UL Grant), which permits the UE to send its UL data. This process is crucial for efficiently managing radio resources and ensuring timely data transmission in a cellular network.

FIG. 4A is a schematic diagram that illustrates BSR procedure according to an exemplary embodiment of the present disclosure. Referring to FIG. 4A,

The network configuration process (e.g., RRC configuration) allows for the specification of which Buffer Status Table (BST) types a Logical Channel Group (LCG) can use (S410). The UE 420 is responsible for determining the appropriate BST-whether a legacy version or another variant(e.g., an advanced version)-to apply for a LCG (S420). Subsequently, the UE 420 signals to the network device 410 which BST has been utilized for the LCG (S430) via BSR (e.g., the provided advanced BST indication). This process ensures that the network device 410 is informed of the BST in use, and then the network device 410 may allocate proper and accurate buffer size which is indicated by the received advanced BST indication and corresponding BST, so as to allow much efficient data communication between the UE 420 and the network device 410, such as a Base Station or gNB within an NG-RAN framework.

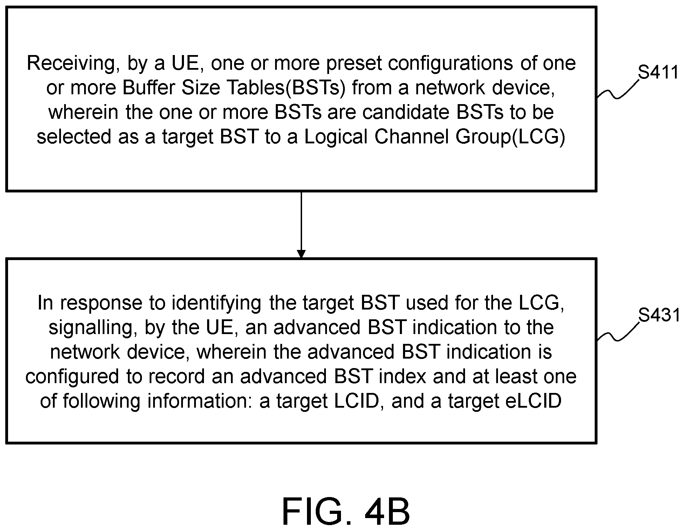

FIG. 4B is a flow chart of BSR method shown according to an exemplary embodiment of the present disclosure. Referring to FIG. 4B, for informing a network device of the network a target Buffer Size Table (BST) used for a Logical Channel Group (LCG), in step S411, the UE receives one or more preset configurations of one or more Buffer Size Tables (BSTs) from the network device, wherein the one or more BSTs are candidate BSTs to be selected as the target BST to the LCG.

For example, the network device may send to the UE a RRC configuration comprising preset configurations of one or more Buffer Size Tables (BSTs) for one or more LCG.

In an embodiment, the UE determines/identifies which BST (e.g., the target BST) of the one or more BSTs should be used for a LCG (which is about to transmit the UL data to the network device).

Next, in step S431, in response to identifying the target BST used for the LCG, the UE signals an advanced BST indication to the network device, wherein the advanced BST indication is configured to record an advanced BST index and at least one of following information: a target LCID, a target eLCID. Wherein, the network device queries a target Buffer Size (BS) range from a plurality of BS ranges in the target BST according to the received advanced BST indication, and the network device grants a upload link (UL) resource for the LCG based on the target BS range, wherein the target BST is identified by the advanced BST index of the received advanced BST indication and the target BS range is identified by the BS index of the target BST.

In one embodiment, the BSR is implemented by transmitting a BSR MAC CE from the UE to the network device. The BSR MAC CE for indicating a buffer size for one LCG is configured as a "short" BSR; the other BSR MAC CE for indicating multiple buffer sizes for multiple LCGs is configured as a "long" BSR. The formats between short BSR and long BSR are different.

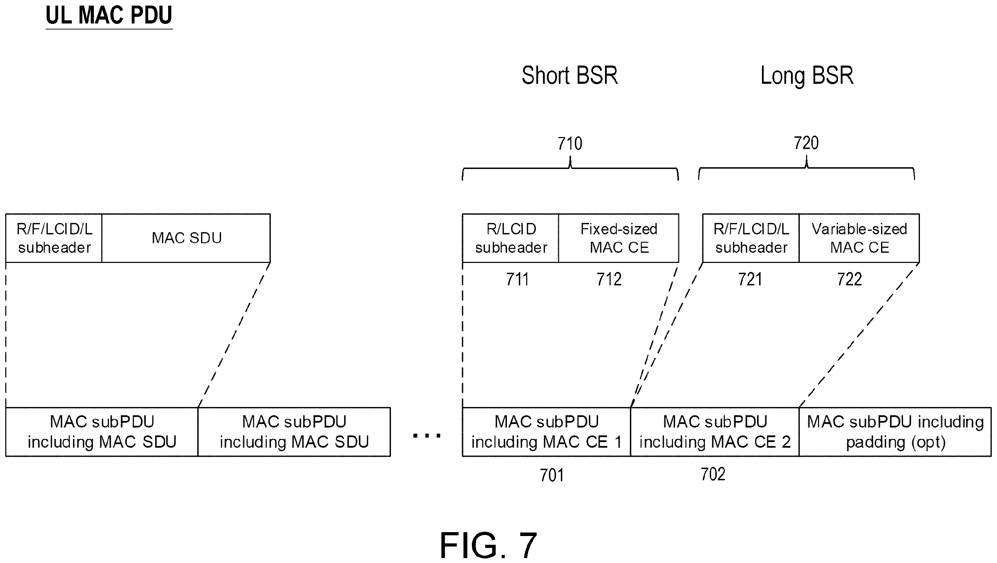

FIG. 7 is a schematic diagram that illustrates UL MAC PDU. Referring to FIG. 7, a UL MAC PDU comprises a plurality of sub-PDUs, wherein one (e.g., 701) of sub-PDUs may include short BSR MAC CE 710 and one (e.g., 702) of sub-PDUs may include long BSR MAC 720. The short BSR MAC CE 710 includes a sub-header 711 and a fixed-sized MAC CE 712; and the long BSR MAC CE 720 includes a sub-header 721 and a variable-sized MAC CE 722.

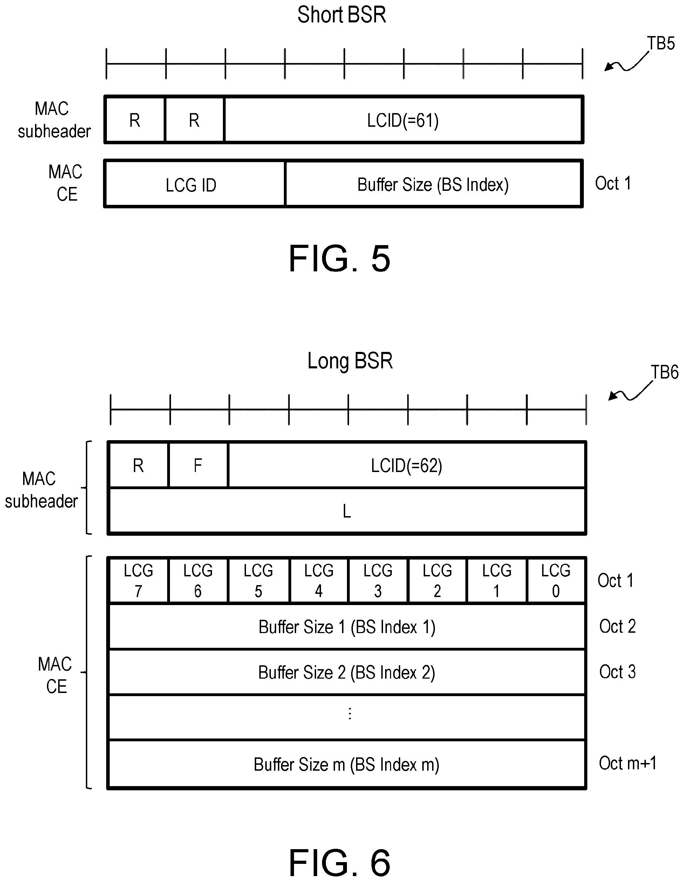

FIG. 5 is a schematic diagram that illustrates a Buffer Size Table (BST) indication for short BSR. For example, referring to FIG. 5, the UE may generate and send a BST indication TB5 as illustrated by FIG. 5 for implanting the short BSR. This BST indication for short BSR comprises a sub-header (e.g., MAC sub-header) and a CE (e.g., MAC CE), wherein the sub-header is configured to record two reversed bit fields "R" and a LCID field which has a default value "61" for indicating the short BSR. In other words, the LCID field indicates the whole format of the short BSR MAC CE. Furthermore, the CE is configured to record a LCG ID field (3 bits) and a Buffer Size field (also referred to BS index hereinafter) in one octet.

FIG. 6 is a schematic diagram that illustrates a BST indication for long BSR. For example, referring to FIG. 6, the UE may generate and send a BST indication TB6 as illustrated by FIG. 6 for implanting the long BSR. This BST indication for long BSR comprises a sub-header (e.g., MAC sub-header) and a CE (e.g., MAC CE), wherein the sub-header is configured to record a reversed bit field "R", a field "F" and a LCID field which has a default value "62" for indicating the long BSR. In other words, the LCID field indicates the whole format of the long BSR MAC CE. Furthermore, the CE is configured to record a LCG bitmap (8 bits) and one or more 8-bits Buffer Size field (also referred to BS index hereinafter). For example, the Oct1 of the CE is the LCG bitmap, the LCG bitmap comprises 8 bit values respectively corresponding to 8 candidate LCGs, and each bit value of one candidate LCG indicates whether the said one candidate LCG is activated (e.g., bit value "1" indicates that the corresponding candidate LCG is activated; bit value "0" indicates that the corresponding candidate LCG is not activated). The "candidate" means the LCG can be activated or not according the demanding. The "activated" means this LCG is about to transmit UL data and the buffer size for this LCG can be identified by looking up the recorded corresponding BS index from the indicated target BST. m is the total number of the activated candidate LCG.

For example, if LCGO and LCG3 are activated, the CE are configured to record two octet for the BS index respectively corresponding to the LCGO and LCG3, where the Oct2 is the BS index for LCGO and Oct3 is the BS index for LCG3.

LCG ID: The Logical Channel Group ID field identifies the group of logical channel(s) whose buffer status is being reported. The length of the field is 3 bits for the case of Short BSR and Short Truncated BSR formats, and 8 bits for the case of Extended Short BSR and Extended Short Truncated BSR formats.

LCGi (e.g., LCGO to LCG8): For the Long BSR format, Refined Long BSR format, Extended Long BSR format, Pre-emptive BSR format, and Extended Pre-emptive BSR format, this field indicates the presence of the Buffer Size field for the logical channel group i. The LCGi field set to 1 indicates that the Buffer Size field for the logical channel group i is reported. The LCGi field set to 0 indicates that the Buffer Size field for the logical channel group i is not reported. For the Long Truncated BSR format and the Extended Long Truncated BSR format, this field indicates whether logical channel group i has data available. The LCGi field set to 1 indicates that logical channel group i has data available. The LCGi field set to 0 indicates that logical channel group i does not have data available.

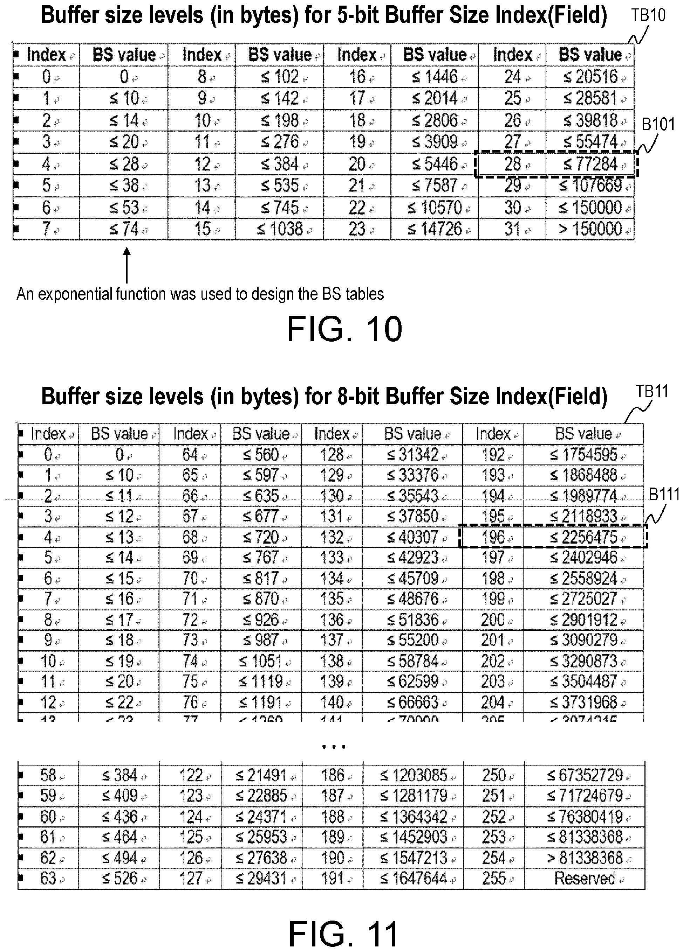

Buffer Size (or BS index): The Buffer Size field identifies the total amount of data available according to the data volume calculation procedure in 3GPP TSs 38.322 and 38.323 across all logical channels of a logical channel group after the MAC PDU has been built (i.e. after the logical channel prioritization procedure, which may result the value of the Buffer Size field to zero). The amount of data is indicated in number of bytes. The size of the RLC headers and MAC sub-headers are not considered in the buffer size computation. The length of this field for the Short BSR format and the Short Truncated BSR format is 5 bits. The length of this field for the Extended Short BSR format and the Extended Short Truncated BSR format is 8 bits. The length of this field for the Long BSR format, the Refined Long BSR format, the Long Truncated BSR format, the Extended Long BSR format, and the Extended Long Truncated format is 8 bits. The values for the 5-bit Buffer Size fields are shown as FIG. 10 (e.g., legacy BST table for 5-bits BS index). The values for the 8-bit Buffer Size fields in the Long BSR format, the Long Truncated BSR format, the Extended Long BSR format, and the Extended Long Truncated format are shown as FIG. 11 (e.g., legacy BST table for 8-bits BS index). For the Refined Long BSR format, if an LCG is configured with *additionalBSR-TableAllowed* and the amount of data for an LCG is within the buffer sizes specified in corresponding advanced BST table, the MAC entity shall use the buffer sizes specified in the advanced BST table to set the value of this field; otherwise, the MAC entity shall use the legacy BST table instead. For the Long BSR format, the Refined Long BSR format, the Long Truncated BSR format, the Extended Long BSR format, and the Extended Long Truncated format, the Buffer Size fields are included in ascending order based on the LCGi.

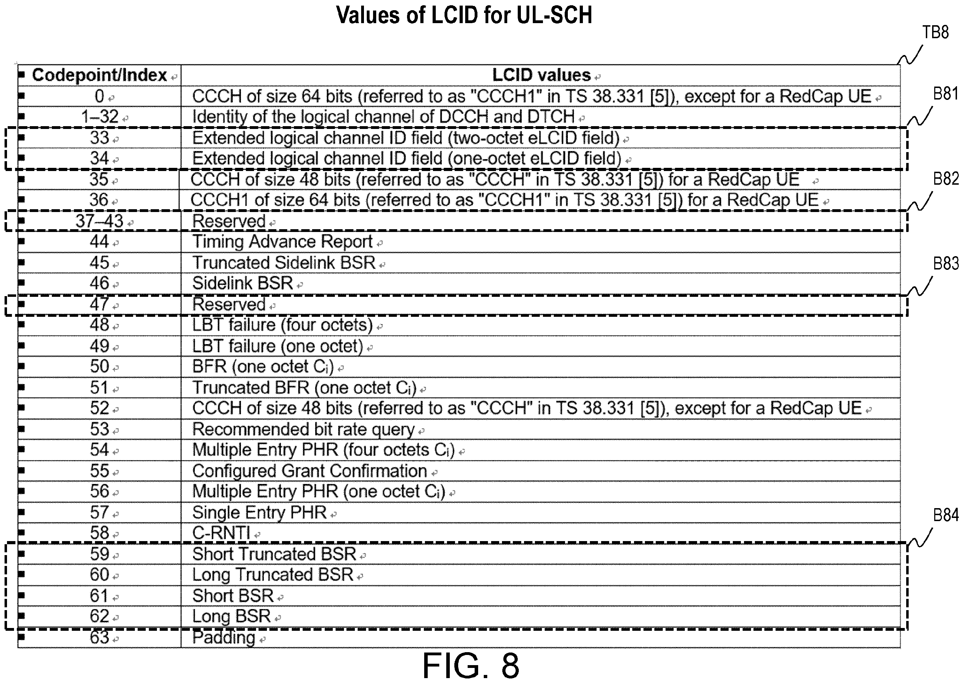

FIG. 8 is a schematic diagram that illustrates values of LCID for UL-SCH. Referring to FIG. 8, in table TB8, there are some indexes related to the provided method, such as indexes for calling eLCID (as indicated by block B81); indexes for be reserved (as indicated by block B82); a further reversed index(as indicated by block B83); indexes for indicating the corresponding legacy format of Short BSR(e.g., index 61), Long BSR (e.g., index 62), Short Truncated BSR(e.g., index 59) and Long Truncated BSR (e.g., index 60) (as indicated by block B84).

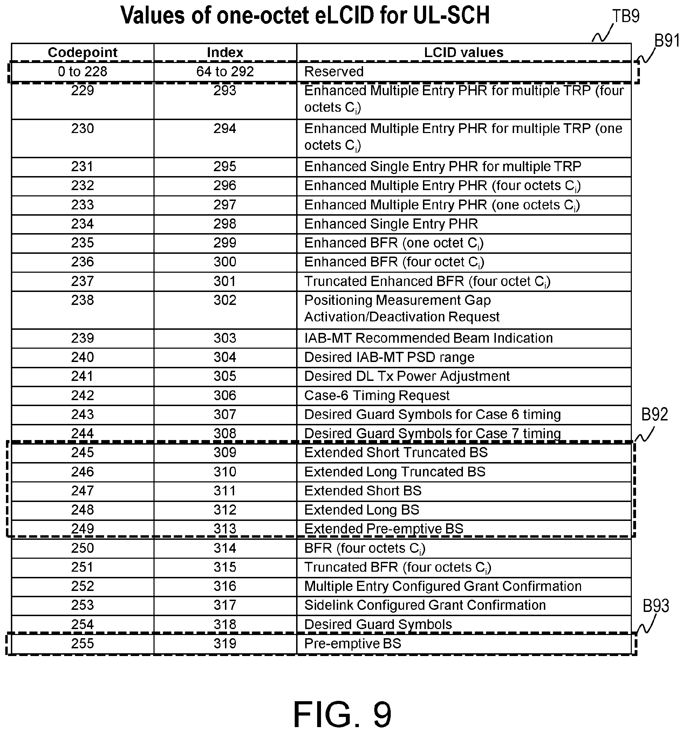

FIG. 9 is a schematic diagram that illustrates values of one-octet eLCID for UL-SCH. Referring to FIG. 9, in table TB9, there are some indexes related to the provided method, such as indexes for be reserved(as indicated by block B91); indexes for indicating Extended Short Truncated B S(e.g., index 309), Extended Long Truncated BS (e.g., index 310), Extended Short BS (e.g., index 311) and Extended Long BS (e.g., index 312) and Extended Pre-emptive BS (e.g., index 313) (as indicated by block B92); and index for indicating Pre-emptive BS (e.g., index 319) (as indicated by block B93).

In one embodiment, the network device may identify the target BST for a LCG based on a BST indication sent from UE and then looks up a target BS value based on the BS index of the target BST.

FIG. 10 is a schematic diagram that illustrates a Buffer Size table for 5-bits Buffer Size Index. Referring to FIG. 10, the 5-bits BS index may record 32 indexes, and the corresponding BST TB10 includes 32 indexes and corresponding BS values, wherein each BS value indicate a buffer size range in bytes. For example, as indicated by block B101, when the BS index is "28", the network device will identify the corresponding BS value "77284", and the network device may then allocate a UL resource with 77284 bytes by considering that the UL data amount for the LCG is more than 55474 bytes and less than or equal to 77284 bytes.

FIG. 11 is a schematic diagram that illustrates a Buffer Size table for 8-bits Buffer Size Index. Referring to FIG. 11, the 8-bits BS index may record 256 indexes, and the corresponding BST TB11 includes 256 indexes and corresponding BS values, wherein each BS value indicate a buffer size range in bytes. For example, as indicated by block B111, when the BS index is "196", the network device will identify the corresponding BS value "2256475", and the network device may then allocate a UL resource with 2256475 bytes by considering that the UL data amount for the LCG is more than 2118933 bytes and less than or equal to 2256475 bytes.

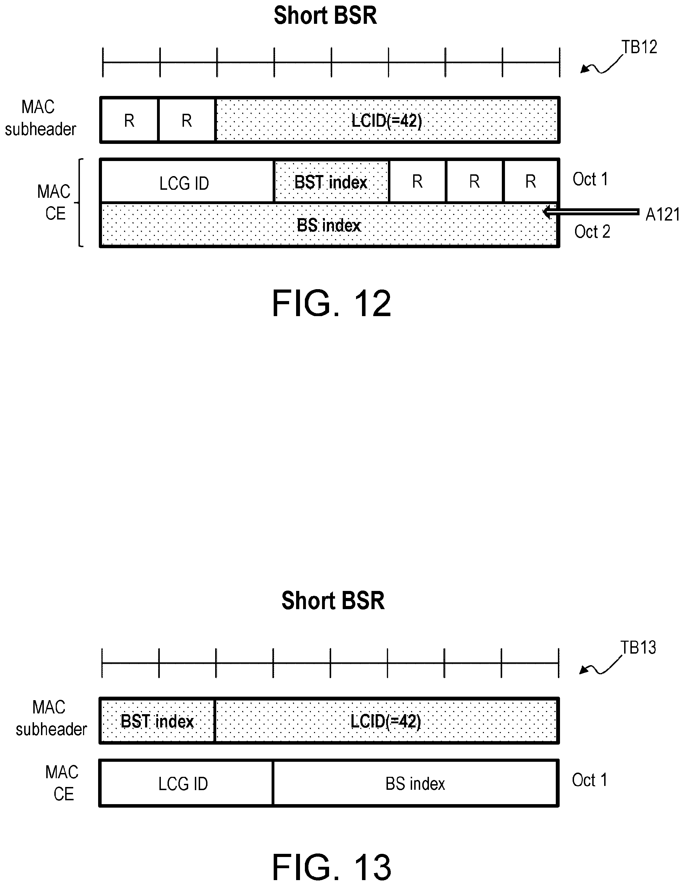

In some embodiments, one or more advanced BST index is provided in the advanced BST indication provided by the present disclosure, the details are described by FIG. 12 to FIG. 17.

FIG. 12 is a schematic diagram that illustrates an advanced BST indication for short BSR according to an exemplary embodiment of the present disclosure. Referring to FIG. 12, the advanced BST indication includes a sub-header (e.g., MAC sub-header) and a control element (e.g., MAC CE),the sub-header is configured to record the target LCID, wherein the target LCID indicates a format of the advanced BST indication and indicates the candidate BSTs capable of being used as the target BST, wherein the CE is configured to record an identification of the LCG(LCG ID), the advanced BST index and 8-bits the BS index, wherein the LCG ID and the advanced BST index belongs to the same one octet, wherein the advanced BST index indicates the target BST from the candidate BSTs.

For example, as illustrated by TB12, the MAC sub-header includes fields: two reserved bits and a LCID, wherein the LCID field records value of the target LCID (e.g., index value "42"), and the value for the target LCID can be configured from indexes "37"-"43" and "47" rather than "61".

Furthermore, the MAC CE includes two octets, one octet (e.g., Oct1) includes fields: a LCG ID, an advanced BST index, three reversed bits, and one octet (e.g., Oct2) includes field of BS index. As illustrated by arrow A121, the BS index is a new octet comparing to the legacy BST indication (shown by FIG.5) for short BSR. In addition, the field of BST index is a new field comparing to the legacy BST indication.

FIG. 13 is a schematic diagram that illustrates an advanced BST indication for short BSR according to an exemplary embodiment of the present disclosure. Referring to FIG. 13, the advanced BST indication comprises a sub-header and a control element (CE), wherein the sub-header is configured to record the advanced BST index and the target LCID in one octet, wherein the target LCID indicates a format of the advanced BST indication and indicates the candidate BSTs capable of being used as the target BST, wherein the CE is configured to record an identification of the LCG (LCG ID) and 5-bits the BS index, wherein the LCG ID and the BS index belongs to the same one octet, wherein the advanced BST index indicates the target BST from the candidate BSTs.

For example, as illustrated by TB13, the MAC sub-header includes fields: a 2-bits advanced BST index and a LCID, wherein the LCID field records value of the target LCID (e.g., index value "42"), and the value for the target LCID can be configured from indexes "37"-"43" and "47" rather than "61".

Furthermore, the MAC CE includes one octet (e.g., Oct1) which includes fields: a LCG ID and a BS index. In addition, the field of BST index in the MAC sub-header is a new field comparing to the legacy BST indication.

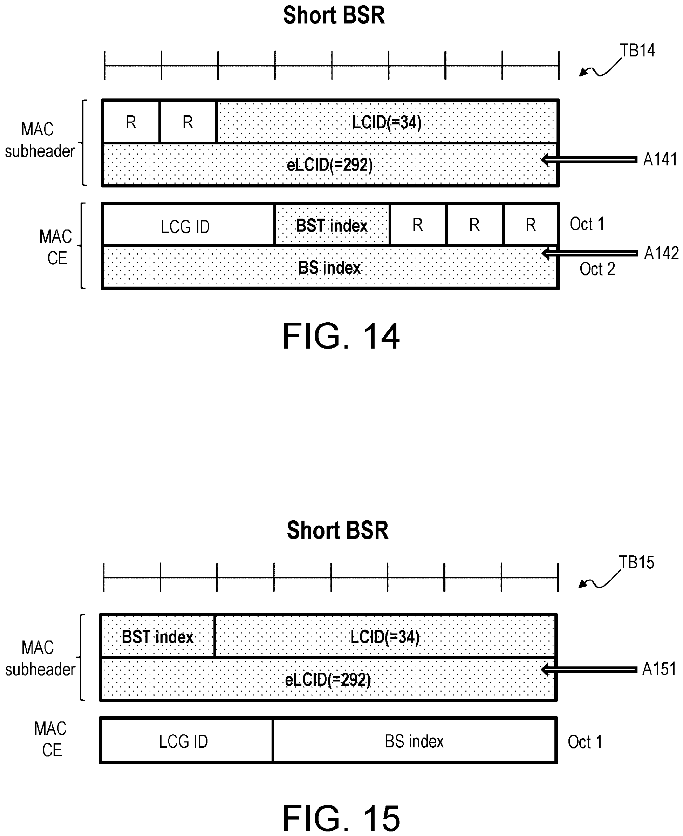

FIG. 14 is a schematic diagram that illustrates an advanced BST indication for short BSR according to an exemplary embodiment of the present disclosure. Referring to FIG. 14, the advanced BST indication comprises a sub-header and a control element (CE), wherein the sub-header is configured to record the target LCID and the target eLCID, wherein the target LCID indicates a format of the advanced BST indication, and the target eLCID indicates the candidate BSTs capable of being used as the target BST, wherein the CE is configured to record an identification of the LCG (LCG ID), the advanced BST index and 8-bits the BS index, wherein the LCG ID and the advanced BST index belongs to the same one octet, wherein the advanced BST index indicates the target BST from the candidate BSTs.

For example, as illustrated by TB14, the MAC sub-header includes two octets, the first one octet includes fields: two reserved bits and a LCID, wherein the LCID field records index value "34" which is used for indicating the below octet is an one-octet eLCID field. In the second one octet, it includes a field of eLCID, and the index value is the target eLCID (e.g., index value "292"), and the value for the target eLCID can be configured from indexes "64"-"292". As illustrated by arrow A141, the target eLCID is a new octet comparing to the legacy BST indication (shown by FIG.5) for short BSR.

Furthermore, the MAC CE includes two octets, one octet (e.g., Oct1) includes fields: a LCG ID, an advanced BST index, three reversed bits, and one octet (e.g., Oct2) includes field of BS index. As illustrated by arrow A142, the BS index is a new octet comparing to the legacy BST indication (shown by FIG.5) for short BSR. In addition, the field of BST index is a new field comparing to the legacy BST indication.

FIG. 15 is a schematic diagram that illustrates an advanced BST indication for short BSR according to an exemplary embodiment of the present disclosure. Referring to FIG. 15, the advanced BST indication comprises a sub-header and a control element (CE), wherein the sub-header is configured to record the advanced BST index and the target LCID in one octet, and record the target eLCID in another octet, wherein the target LCID indicates a format of the advanced BST indication, wherein the target eLCID indicates the candidate BSTs capable of being used as the target BST, wherein the CE is configured to record an identification of the LCG (LCG ID) and 5-bits the BS index, wherein the LCG ID and the BS index belongs to the same one octet, wherein the advanced BST index indicates the target BST from the candidate BSTs.

For example, as illustrated by TB15, the MAC sub-header includes two octets, the first one octet includes fields: a BST index and a LCID, wherein the LCID field records index value "34" which is used for indicating the below octet is an one-octet eLCID field. In the second one octet, it includes a field of eLCID, and the index value is the target eLCID (e.g., index value "292"), and the value for the target eLCID can be configured from indexes "64"-"292". As illustrated by arrow A151, the target eLCID is a new octet comparing to the legacy BST indication(shown by FIG.5) for short BSR.

Furthermore, the MAC CE includes one octet(e.g., Oct1) which includes fields: a LCG ID and a BS index. In addition, the field of BST index in the MAC sub-header is a new field comparing to the legacy BST indication.

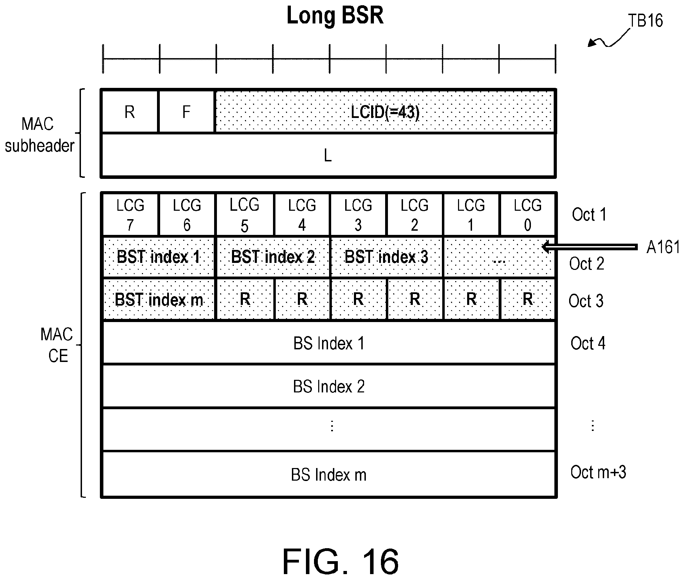

FIG. 16 is a schematic diagram that illustrates an advanced BST indication for long BSR according to an exemplary embodiment of the present disclosure. Referring to FIG. 16, the advanced BST indication comprises a sub-header and a control element (CE), wherein the sub-header is configured to record the target LCID, wherein the target LCID indicates a format of the advanced BST indication, wherein the CE is configured to record a 8-bits LCG bitmap, one or more advanced BST indexes corresponding to the LCG bitmap, and one or more BS indexes corresponding to the one or more advanced BST indexes, wherein the LCG bitmap comprises 8 bit values respectively corresponding to candidate LCGs, and each bit value of one candidate LCG indicates whether a corresponding advanced BST index exists to indicate the target BST of the said one candidate LCG, wherein each of the advanced BST indexes indicates the target BST from the candidate BSTs.

For example, as illustrated by TB 16, the MAC sub-header includes two octets, the first one octet includes fields: a reserved bit "R", a field of "F" and a LCID, wherein the LCID field records value of the target LCID (e.g., index value "43"), and the value for the target LCID can be configured from indexes "37"-"43" and "47" rather than "61". The second octet includes "L" field. The field of "F"(Format field): indicates the size of the Length field. The size of the F field is 1 bit. The value 0 indicates 8 bits of the Length field. The value 1 indicates 16 bits of the Length field. The field of "L"(Length field): indicates the length of the corresponding MAC SDU or variable-sized MAC CE in bytes. The size of the L field is indicated by the F field.

Furthermore, the MAC CE includes three octets and m octets, wherein m is the total number of activated candidate LCG. The first one octet(e.g., Oct1) is a LCG bitmap which includes 8 bit values (e.g., LCGO - LCG7) respectively corresponding to 8 LCGs. The second octet and the third octet are used for recording one or more BST indexes of one or more activated candidate LCG. As indicated by arrow A161, the field of BST index in the MAC CE are new octets comparing to the legacy BST indication for long BSR.

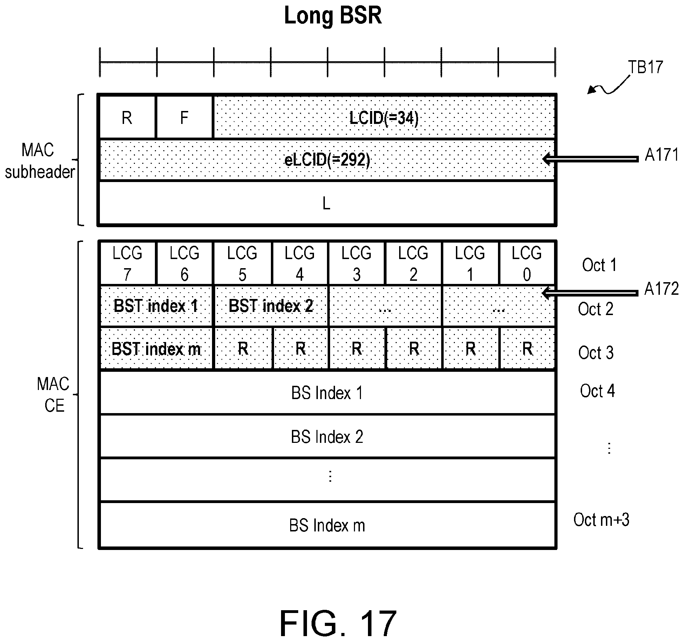

FIG. 17 is a schematic diagram that illustrates an advanced BST indication for long BSR according to an exemplary embodiment of the present disclosure. Referring to FIG. 17, the advanced BST indication comprises a sub-header and a control element (CE), wherein the sub-header is configured to record the target LCID and the target eLCID, wherein the target LCID indicates Extended logical channel ID field (one-octet eLCID field), and the target eLCID indicates a format of the advanced BST indication, wherein the CE is configured to record a 8-bits LCG bitmap, one or more advanced BST indexes corresponding to the LCG bitmap, and one or more BS indexes corresponding to the one or more advanced BST indexes, wherein the LCG bitmap comprises 8 bit values respectively corresponding to candidate LCGs, and each bit value of one candidate LCG indicates whether a corresponding advanced BST index exists to indicate the target BST of the said one candidate LCG, wherein each of the advanced BST indexes indicates the target BST from the candidate BSTs.

For example, as illustrated by TB 17, the MAC sub-header includes three octets, the first one octet includes fields: a reserved bit "R", a field of "F" and a LCID, wherein the LCID field records index value "34" which is used for indicating the below octet is an one-octet eLCID field. In the second one octet, it includes a field of eLCID, and the index value is the target eLCID(e.g., index value "292"), and the value for the target eLCID can be configured from indexes "64"-"292". As illustrated by arrow A171, the target eLCID is a new oct comparing to the legacy BST indication (shown by FIG.6) for long BSR. The third octet includes "L" field.

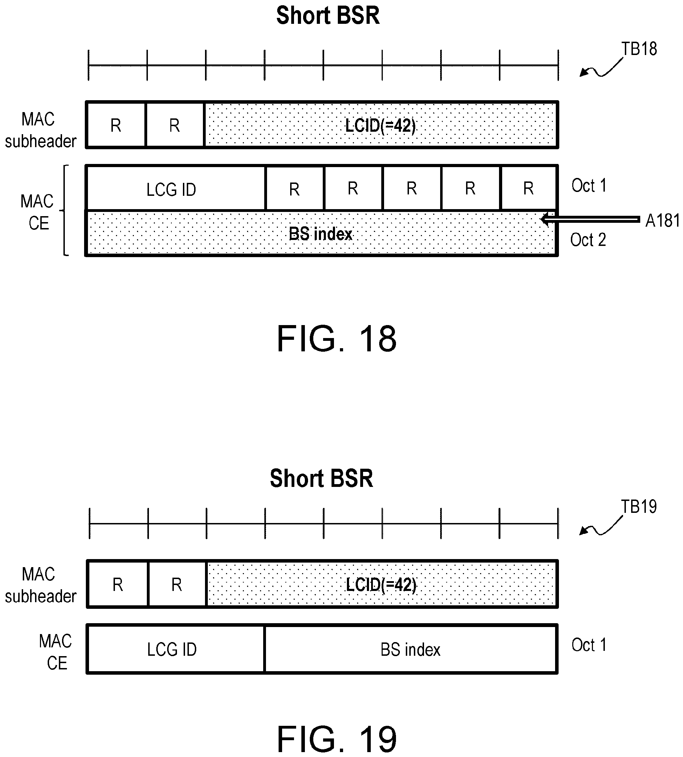

Furthermore, the MAC CE includes three octets and m octets, wherein m is the total number of activated candidate LCG. The first one octet (e.g., Oct1) is a LCG bitmap which includes 8 bit values (e.g., LCGO - LCG7) respectively corresponding to 8 LCGs. The second octet and the third octet are used for recording one or more advanced BST indexes of one or more activated candidate LCG. As indicated by arrow A172, the fields of advanced BST indexes in the MAC CE are new octets comparing to the legacy BST indication for long BSR.In some embodiments, LCID in the advanced BST indication is configured to indicate the target BST directly, and the details are described by FIG. 18 to FIG. 21 below.

FIG. 18 is a schematic diagram that illustrates a advanced BST indication for short BSR according to an exemplary embodiment of the present disclosure. Referring to FIG. 18, the advanced BST indication comprises a sub-header and a control element (CE), wherein the sub-header is configured to record the target LCID, wherein the target LCID indicates a format of the advanced BST indication and indicates the target BST from the candidate BSTs, wherein the CE is configured to record an identification of the LCG (LCG ID) and 8-bits the BS index.

For example, as illustrated by TB18, the MAC sub-header includes fields: two reserved bits and a LCID, wherein the LCID field records value of the target LCID (e.g., index value "42"), and the value for the target LCID can be configured from indexes "37"-"43" and "47" rather than "61". The index value of LCID is pre-configured for indicating an advanced BST for 8-bits BS index.

Furthermore, the MAC CE includes two octets, one octet (e.g., Oct1) includes fields: a LCG ID and five reversed bits, and one octet (e.g., Oct2) includes field of BS index. As illustrated by arrow A181, the BS index is a new octet comparing to the legacy BST indication(shown by FIG.5) for short BSR.

FIG. 19 is a schematic diagram that illustrates an advanced BST indication for short BSR according to an exemplary embodiment of the present disclosure. Referring to FIG. 19, the advanced BST indication comprises a sub-header and a control element (CE), wherein the sub-header is configured to record the target LCID, wherein the target LCID indicates a format of the advanced BST indication and indicates the target BST from the candidate BSTs, wherein the CE is configured to record an identification of the LCG (LCG ID) and 5-bits the BS index, wherein the LCG ID and the BS index belongs to the same one octet.

For example, as illustrated by TB19, the MAC sub-header includes fields: two reserved bits and a LCID, wherein the LCID field records value of the target LCID (e.g., index value "42"), and the value for the target LCID can be configured from indexes "37"-"43" and "47" rather than "61". The index value of LCID is pre-configured for indicating an advanced BST for 5-bits BS index.

Furthermore, the MAC CE includes one octet (e.g., Oct1) which includes fields: a LCG ID and a BS index.

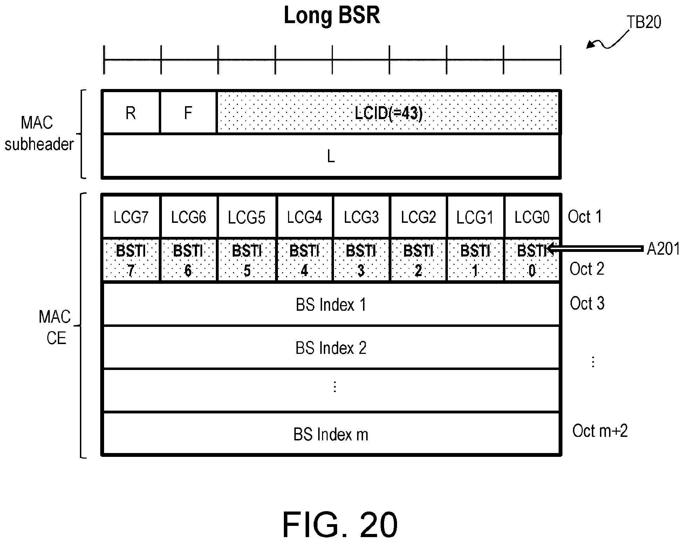

FIG. 20 is a schematic diagram that illustrates an advanced BST indication for long BSR according to an exemplary embodiment of the present disclosure. Referring to FIG. 20, the advanced BST indication comprises a sub-header and a control element (CE), wherein the sub-header is configured to record the target LCID, wherein the target LCID indicates a format of the advanced BST indication and indicates an advanced BST from the candidate BSTs, wherein the CE is configured to record a 8-bits LCG bitmap, a 8-bits BST bitmap, and one or more BS indexes corresponding to one or more activated candidate LCGs, wherein the LCG bitmap comprises 8 bit values respectively corresponding to 8 candidate LCGs, and each bit value of one candidate LCG indicates whether the said one candidate LCG is activated, wherein the BST bitmap comprises 8 bit values respectively corresponding to 8 BST indexes, and the 8 BST indexes are respectively corresponding to the 8 candidate LCGs, wherein each bit value of one BST index indicates whether a legacy BST or the advanced BST, from the candidate BSTs, is used for an activated corresponding LCG as the target BST.

For example, as illustrated by TB20 the MAC sub-header includes two octets, the first one octet includes fields: a reserved bit "R", a field of "F" and a LCID, wherein the LCID field records value of the target LCID (e.g., index value "43"), and the value for the target LCID can be configured from indexes "37"-"43" and "47" rather than "61". The second octet includes "L" field. The index value of LCID is pre-configured for indicating an advanced BST for 8-bits BS index.

Furthermore, the MAC CE includes two octets and m octets, wherein m is the total number of activated candidate LCG. The first one octet (e.g., Oct1) is a LCG bitmap which includes 8 bit values (e.g., LCGO - LCG7) respectively corresponding to 8 LCGs. The second octet is a BST bitmap which includes 8 bit values (e.g., BSTI0 - BSTI7) respectively corresponding to 8 BST indexes. Each bit value of BST bitmap indicates a legacy BST (e.g., bit value "0") or an advanced BST (e.g., bit value "1") is for activated corresponding LCG. As indicated by arrow A201, the field of BST bitmap in the MAC CE is a new octet comparing to the legacy BST indication for long BSR.

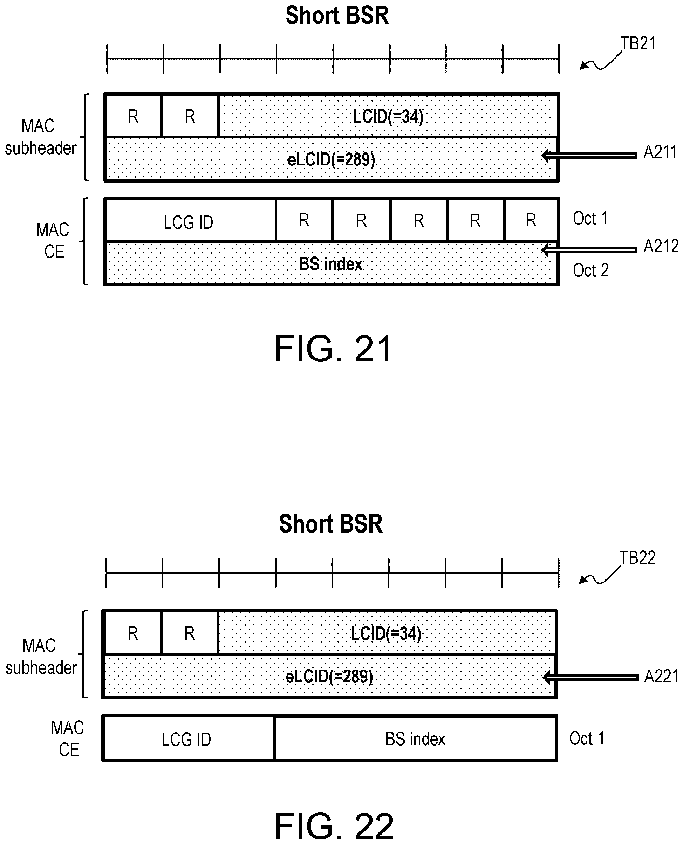

In some embodiments, eLCID in the advanced BST indication is configured to indicate the target BST directly, and the details are described by FIG. 21 to FIG. 26 below.

FIG. 21 is a schematic diagram that illustrates an advanced BST indication for short BSR according to an exemplary embodiment of the present disclosure. Referring to FIG. 21, the advanced BST indication comprises a sub-header and a control element (CE), wherein the sub-header is configured to record the target LCID and the target eLCID, wherein the target LCID indicates Extended logical channel ID field (one-octet eLCID field), and the target eLCID indicates a format of the advanced BST indication and the target BST from the candidate BSTs, wherein the CE is configured to record an identification of the LCG (LCG ID) and 8-bits the BS index.

For example, as illustrated by TB21, the MAC sub-header includes two octets, the first one octet includes fields: two reserved bits and a LCID, wherein the LCID field records index value "34" which is used for indicating the below octet is an one-octet eLCID field. In the second one octet, it includes a field of eLCID, and the index value is the target eLCID (e.g., index value "289"), and the value for the target eLCID can be configured from indexes "64"-"292". As illustrated by arrow A211, the target eLCID is a new octet comparing to the legacy BST indication(shown by FIG.5) for short BSR. The index value of eLCID is pre-configured for indicating an advanced BST for 8-bits BS index.

Furthermore, the MAC CE includes two octets, one octet (e.g., oct1) includes fields: a LCG ID and five reversed bits, and one octet (e.g., Oct2) includes field of BS index. As illustrated by arrow A212, the BS index is a new octet comparing to the legacy BST indication (shown by FIG.5) for short BSR.

FIG. 22 is a schematic diagram that illustrates an advanced BST indication for short BSR according to an exemplary embodiment of the present disclosure. Referring to FIG. 22, the advanced BST indication comprises a sub-header and a control element (CE), wherein the sub-header is configured to record the target LCID and the target eLCID, wherein the target LCID indicates Extended logical channel ID field (one-octet eLCID field), and the target eLCID indicates a format of the advanced BST indication and the target BST from the candidate BSTs, wherein the CE is configured to record an identification of the LCG (LCG ID) and 5-bits the BS index, wherein the LCG ID and the BS index belongs to the same one octet.

For example, as illustrated by TB22, the MAC sub-header includes two octets, the first one octet includes fields: two reserved bits and a LCID, wherein the LCID field records index value "34" which is used for indicating the below octet is an one-octet eLCID field. In the second one octet, it includes a field of eLCID, and the index value is the target eLCID (e.g., index value "289"), and the value for the target eLCID can be configured from indexes "64"-"292". As illustrated by arrow A221, the target eLCID is a new octet comparing to the legacy BST indication (shown by FIG.5) for short BSR. The index value of eLCID is pre-configured for indicating an advanced BST for 5-bits BS index.

Furthermore, the MAC CE includes one octet (e.g., Oct1) which includes fields: a LCG ID and a BS index.

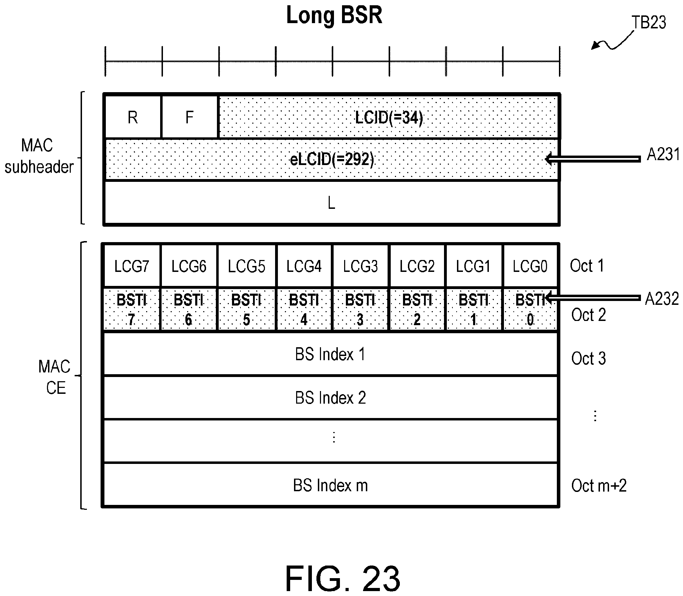

FIG. 23 is a schematic diagram that illustrates an advanced BST indication for long BSR according to an exemplary embodiment of the present disclosure. Referring to FIG. 23, the advanced BST indication comprises a sub-header and a control element (CE), wherein the sub-header is configured to record the target LCID and the target eLCID, wherein the target LCID indicates Extended logical channel ID field (one-octet eLCID field), and the target eLCID indicates a format of the advanced BST indication and an advanced BST from the candidate BSTs, wherein the CE is configured to record a 8-bits LCG bitmap, a 8-bits BST bitmap, and one or more BS indexes corresponding to one or more activated candidate LCGs, wherein the LCG bitmap comprises 8 bit values respectively corresponding to 8 candidate LCGs, and each bit value of one candidate LCG indicates whether the said one candidate LCG is activated, wherein the BST bitmap comprises 8 bit values respectively corresponding to 8 BST indexes, and the 8 BST indexes are respectively corresponding to the 8 candidate LCGs, wherein each bit value of one BST index indicates whether a legacy BST or the advanced BST, from the candidate BSTs, is used for an activated corresponding LCG as the target BST.

For example, as illustrated by TB23, the MAC sub-header includes three octets, the first one octet includes fields: a reserved bit "R", a field of "F" and a LCID, wherein the LCID field records index value "34" which is used for indicating the below octet is an one-octet eLCID field. In the second one octet, it includes a field of eLCID, and the index value is the target eLCID (e.g., index value "292"), and the value for the target eLCID can be configured from indexes "64"-"292". As illustrated by arrow A231, the target eLCID is a new octet comparing to the legacy BST indication (shown by FIG.6) for long BSR. The third octet includes "L" field. The index value of eLCID is pre-configured for indicating an advanced BST for 8-bits BS index.

Furthermore, the MAC CE includes two octets and m octets, wherein m is the total number of activated candidate LCG. The first one octet (e.g., Oct1) is a LCG bitmap which includes 8 bit values (e.g., LCGO - LCG7) respectively corresponding to 8 LCGs. The second octet is a BST bitmap which includes 8 bit values (e.g., BSTIO - BSTI7) respectively corresponding to 8 BST indexes. Each bit value of BST bitmap indicates a legacy BST (e.g., bit value "0") or an advanced BST (e.g., bit value "1") is for activated corresponding LCG. As indicated by arrow A232, the field of BST bitmap in the MAC CE is a new octet comparing to the legacy BST indication for long BSR.

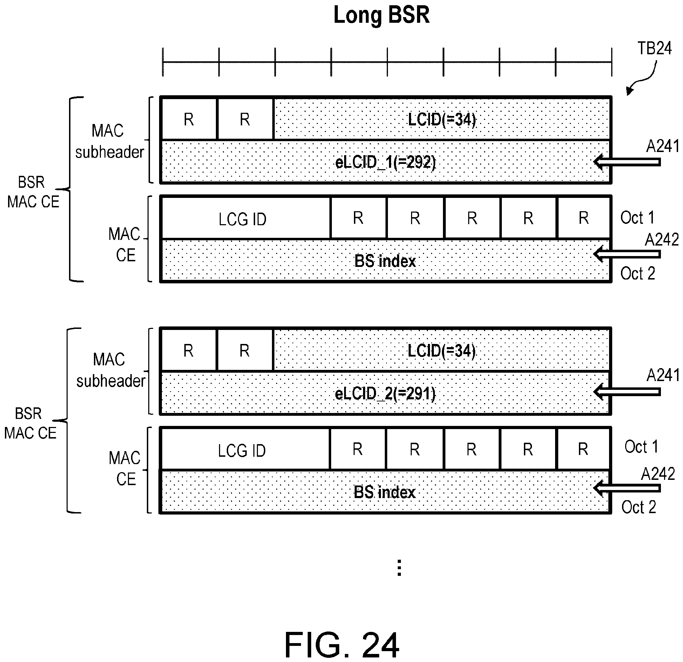

FIG. 24 is a schematic diagram that illustrates an advanced BST indication for long BSR according to an exemplary embodiment of the present disclosure. Referring to FIG. 24, the advanced BST indication comprises a plurality of BSR MAC CEs , and each of the BSR MAC CEs comprises a sub-header and a control element (CE), wherein the sub-header is configured to record the target LCID and the target eLCID, wherein the target LCID indicates Extended logical channel ID field (one-octet eLCID field), and the target eLCID indicates a format of the advanced BST indication and the target BST from the candidate BSTs, wherein the CE is configured to record an identification of the LCG (LCG ID) and 8-bits the BS index.

For example, as illustrated by TB24, the long BSR in this case includes multiple short BSR MAC CE as shown by FIG. 21, wherein each short BSR MAC CE corresponds a LCG. The index value of eLCID is pre-configured for indicating an advanced BST for 8-bits BS index. Furthermore, as illustrated by arrow A241, the target eLCID is a new octet comparing to the legacy BST indication (shown by FIG.5) for a short BSR. As illustrated by arrow A242, the BS index is a new octet comparing to the legacy BST indication (shown by FIG.5) for a short BSR.

It should be noted that in other embodiments, the each of the multiple BSR MAC CEs for long BSR can be replaced by short BSR illustrated by FIG. 22, FIGs. 18-19 and FIGs. 12-15.

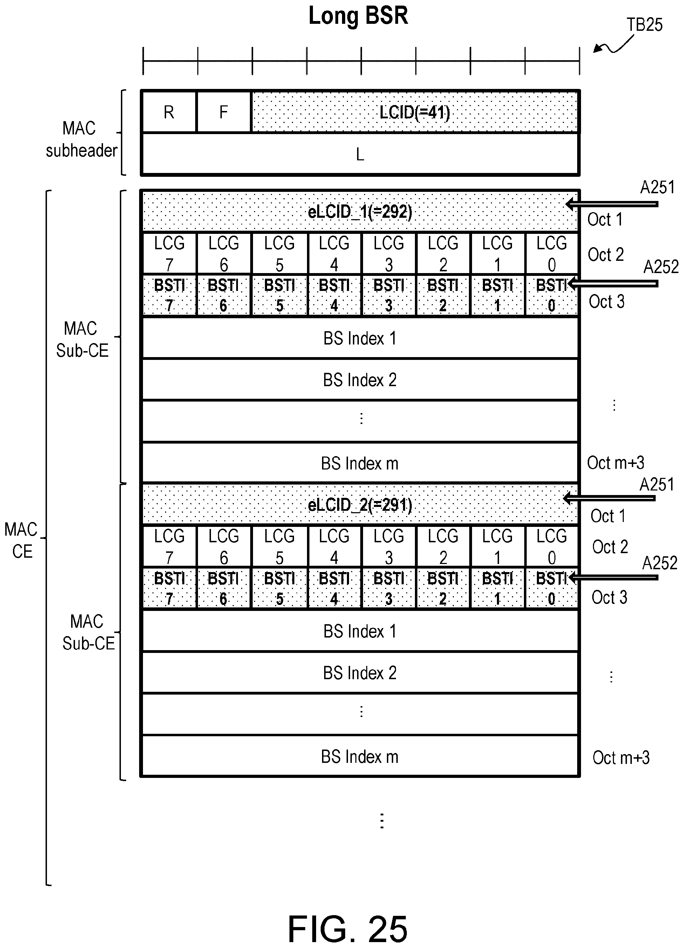

FIG. 25 is a schematic diagram that illustrates an advanced BST indication for long BSR according to an exemplary embodiment of the present disclosure. Referring to FIG. 25, the advanced BST indication comprises a sub-header and a control element (CE), and the CE comprises a plurality of sub-CEs, wherein each of the sub-CEs is configured to record one reserved eLCID, a 8-bits LCG bitmap, a 8-bits BST bitmap, and one or more BS indexes corresponding to one or more activated candidate LCG, wherein the recorded reserved eLCID indicates one advanced BST from the candidate BSTs, wherein for each sub-CE, the LCG bitmap comprises 8 bit values respectively corresponding to 8 candidate LCGs, and each bit value of one candidate LCG indicates whether the said one candidate LCG is activated, wherein the BST bitmap comprises 8 bit values respectively corresponding to 8 BST indexes, and the 8 BST indexes are respectively corresponding to the 8 candidate LCGs, wherein each bit value of one BST index indicates whether a legacy BST or the advanced BST indicated by the eLCID of the each sub-CE is used for an activated corresponding LCG as the target BST.

For example, as illustrated by TB25 the MAC sub-header includes two octets, the first one octet includes fields: a reserved bit "R", a field of "F" and a LCID, wherein the LCID field records value of the target LCID (e.g., index value "41"), and the value for the target LCID can be configured from indexes "37"-"43" and "47" rather than "61". The second octet includes "L" field.

Furthermore, the MAC CE includes multiple sub-CE arranged sequentially, each sub-CE includes three octets and m octets, wherein m is the total number of activated candidate LCG. The first one octet (e.g., Oct1) is eLCID field, of which the index value (e.g., 292) indicates the target BST for activated LCG indicated by this sub-CE. The second octet (e.g., Oct2) is a LCG bitmap which includes 8 bit values (e.g., LCGO - LCG7) respectively corresponding to 8 LCGs. The third octet (e.g., Oct3) is a BST bitmap which includes 8 bit values (e.g., BSTIO - BSTI7) respectively corresponding to 8 BST indexes. Each bit value of BST bitmap indicates a legacy BST (e.g., bit value "0") or the advanced BST (e.g., bit value "1") indicated by the eLCID for activated corresponding LCG. As indicated by arrow A251, the field of eLCID in each MAC sub-CE of the MAC CE is a new octet comparing to the legacy BST indication for long BSR. As indicated by arrow A252, the field of BST bitmap in the MAC CE is a new octet comparing to the legacy BST indication for long BSR.

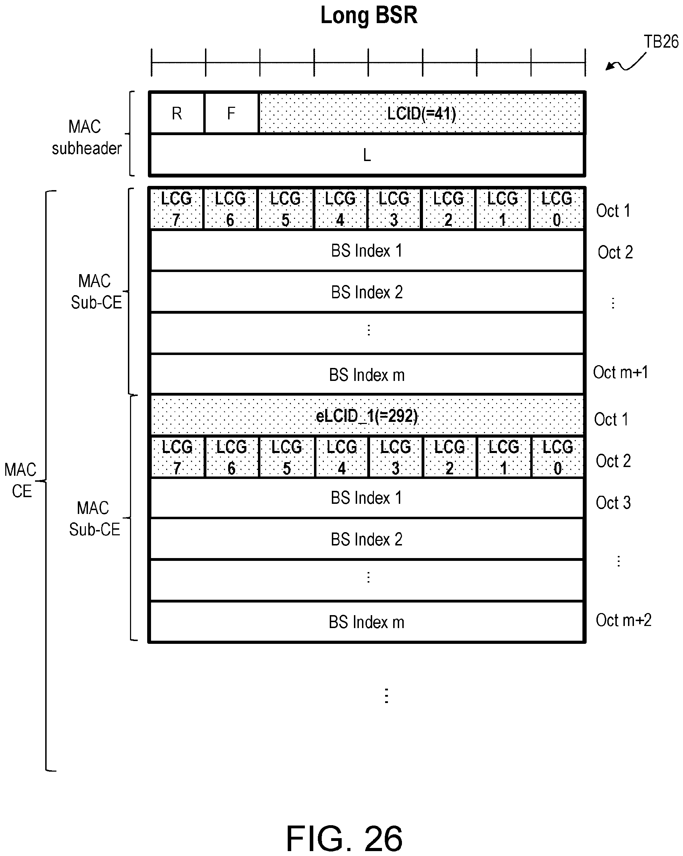

FIG. 26 is a schematic diagram that illustrates an advanced BST indication for long BSR according to an exemplary embodiment of the present disclosure. Referring to FIG. 26, the advanced BST indication comprises a sub-header and a control element (CE), and the CE comprises a first sub-CE and a plurality of second sub-CEs, wherein the first sub-CE is configured to record a 8-bits LCG bitmap and one or more BS indexes corresponding to one or more activated candidate LCG, wherein the LCG bitmap comprises 8 bit values respectively corresponding to 8 candidate LCGs, and each bit value of one candidate LCG indicates whether the said one candidate LCG is activated, and the activated candidates LCG uses a legacy BST as the target BST, wherein each of the second sub-CEs is configured to record one reserved eLCID, a 8-bits LCG bitmap and one or more BS indexes corresponding to one or more activated candidate LCG, wherein the recorded reserved eLCID indicates one advanced BST from the candidate BSTs, wherein the LCG bitmap comprises 8 bit values respectively corresponding to 8 candidate LCGs, and each bit value of one candidate LCG indicates whether the said one candidate LCG is activated, and the activated candidates LCG uses the said one advanced BST as the target BST.

For example, as illustrated by TB26 the MAC sub-header includes two octets, the first one octet includes fields: a reserved bit "R", a field of "F" and a LCID, wherein the LCID field records value of the target LCID(e.g., index value "41"), and the value for the target LCID can be configured from indexes "37"-"43" and "47" rather than "61". The second octet includes "L" field.

Furthermore, the MAC CE includes multiple sub-CE arranged sequentially, the first one sub-CE is for LCG using legacy BST, and the first one sub-CE includes one octet and m octets. The first one octet (e.g., Oct1) is a LCG bitmap which includes 8 bit values (e.g., LCGO - LCG7) respectively corresponding to 8 LCGs. Each bit value in the LCG bitmap indicates whether the corresponding LCG uses the legacy BST. For example, when the bit value of LCGO field is "1", it indicates that the corresponding LCGO is activated and the BST for LCGO should be the legacy BST.

In addition, other sub-CEs following the first one sub-CE are for indicated advanced BSTs. Each of the following sub-CE includes two octets and m octets. The first one octet (e.g., Oct1) is eLCID field, of which the index value (e.g., 292) indicates the target BST (which is an advanced BST) for activated LCG indicated by LCG bitmap in this sub-CE. The second octet (e.g., Oct2) is a LCG bitmap which includes 8 bit values (e.g., LCGO - LCG7) respectively corresponding to 8 LCGs. Each bit value in the LCG bitmap here indicates whether the corresponding LCG uses the advanced BST indicated by the eLCID of this sub-CE.

Based on above, the buffer status report method and the user equipment provided by the embodiments of the present disclosure are capable of: performing BSR by the provided advanced BSR indication to the network device, so as to accurately informing one or more demand buffer sizes for UL resources for one or more particular LCGs. Such that, uplink resources will be allocated more efficiently and the adaptability and sensitivity of the network system will be improved.

## Claims

1. A Buffer Size Reporting (BSR) method, adapted for a user equipment (UE)(120) of a network(100) for informing a network device(110) of the network a target Buffer Size Table (BST) used for a Logical Channel Group (LCG), the method comprising:
receiving, by the UE, one or more preset configurations of one or more BSTs from the network device(110), wherein the one or more BSTs are candidate BSTs to be selected as the target BST to the LCG; and
in response to identifying the target BST used for the LCG, signalling, by the UE(120), an advanced BST indication to the network device(110), wherein the advanced BST indication is configured to record an advanced BST index and at least one of following information: a target LCID, and a target eLCID,
wherein the network device(110) queries a target Buffer Size (BS) range from a plurality of BS ranges in the target BST according to the received advanced BST indication, and the network device(110) grants a upload link (UL) resource for the LCG based on the target BS range, wherein the target BST is identified by the advanced BST index of the received advanced BST indication and the target BS range is identified by a BS index of the target BST.

2. The BSR method according to claim 1, wherein the advanced BST indication comprises a sub-header and a control element (CE),
wherein the sub-header is configured to record the target LCID, wherein the target LCID indicates a format of the advanced BST indication,
wherein the CE is configured to record a 8-bits LCG bitmap, one or more advanced BST indexes corresponding to the LCG bitmap, and one or more BS indexes corresponding to the one or more advanced BST indexes,
wherein the LCG bitmap comprises 8 bit values respectively corresponding to candidate LCGs, and each bit value of one candidate LCG indicates whether a corresponding advanced BST index exists to indicate the target BST of the said one candidate LCG,
wherein each of the advanced BST indexes indicates the target BST from the candidate BSTs.

3. The BSR method according to claim 1, wherein the advanced BST indication comprises a sub-header and a control element (CE),
wherein the sub-header is configured to record the target eLCID, wherein the target eLCID indicates a format of the advanced BST indication,
wherein the CE is configured to record a 8-bits LCG bitmap, one or more advanced BST indexes corresponding to the LCG bitmap, and one or more BS indexes corresponding to the one or more advanced BST indexes,
wherein the LCG bitmap comprises 8 bit values respectively corresponding to candidate LCGs, and each bit value of one candidate LCG indicates whether a corresponding advanced BST index exists to indicate the target BST of the said one candidate LCG,
wherein each of the advanced BST indexes indicates the target BST from the candidate BSTs.

4. The BSR method according to claim 1, wherein the advanced BST indication comprises a sub-header and a control element (CE),
wherein the sub-header is configured to record the target LCID, wherein the target LCID indicates a format of the advanced BST indication,
wherein the CE is configured to record a 8-bits LCG bitmap, a 8-bits BST bitmap, and one or more BS indexes corresponding to one or more activated candidate LCGs,
wherein the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 LCGs, wherein each bit value of one BST index corresponding to an activated LCG indicates whether a legacy BST or the advanced BST is used for the activated corresponding LCG as the target BST.

5. The BSR method according to claim 1, wherein the advanced BST indication comprises a sub-header and a control element (CE),
wherein the sub-header is configured to record the target eLCID, wherein the target eLCID indicates a format of the advanced BST indication,
wherein the CE is configured to record a 8-bits LCG bitmap, a 8-bits BST bitmap, and one or more BS indexes corresponding to one or more activated candidate LCGs,
wherein the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 LCGs, wherein each bit value of one BST index corresponding to an activated LCG indicates whether a legacy BST or the advanced BST is used for the activated corresponding LCG as the target BST.

6. The BSR method according to claim 1, wherein the advanced BST indication comprises a plurality of BSR MAC CEs, and each of the BSR MAC CEs comprises a sub-header and a control element (CE),
wherein the sub-header is configured to record the target LCID and the target eLCID, wherein the target LCID indicates a format of the advanced BST indication, and the target eLCID indicates the target BST from the candidate BSTs,
wherein the CE is configured to record an identification of the LCG (LCG ID) and 8-bits the BS index.

7. The BSR method according to claim 1, wherein the advanced BST indication comprises a sub-header and a control element (CE), and the CE comprises a plurality of sub-CEs,
wherein each of the sub-CEs is configured to record one reserved eLCID, a 8-bits LCG bitmap, a 8-bits BST bitmap, and one or more BS indexes corresponding to one or more activated candidate LCG, wherein the recorded reserved eLCID indicates one advanced BST from the candidate BSTs, wherein for each sub-CE,
the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 candidate LCGs, wherein each bit value of one BST index indicates whether a legacy BST or the advanced BST indicated by the eLCID of the each sub-CE is used for an activated corresponding LCG as the target BST.

8. The BSR method according to claim 1, wherein the advanced BST indication comprises a sub-header and a control element (CE), and the CE comprises a first sub-CE and a plurality of second sub-CEs,
wherein the first sub-CE is configured to record a 8-bits LCG bitmap and one or more BS indexes corresponding to one or more activated candidate LCG,
wherein the LCG bitmap comprises 8 bit values respectively corresponding to 8 candidate LCGs, and each bit value of one candidate LCG indicates whether the said one candidate LCG is activated, and the activated candidates LCG uses a legacy BST as the target BST,
wherein each of the second sub-CEs is configured to record one reserved eLCID, a 8-bits LCG bitmap and one or more BS indexes corresponding to one or more activated candidate LCG,
wherein the recorded reserved eLCID indicates one advanced BST from the candidate BSTs,
wherein the LCG bitmap comprises 8 bit values respectively corresponding to 8 candidate LCGs, and each bit value of one candidate LCG indicates whether the said one candidate LCG is activated, and the activated candidates LCG uses the said one advanced BST as the target BST.

9. A user equipment (UE)(120), adapted for performing a Buffer Size Reporting (BSR), comprising:
a transceiver(223), used for transmitting or receiving signals;
a memory(222), used for storing a program code; and
a processor(221), coupled to the transceiver(223) and the memory(222), and configured for executing the program code to implement a Buffer Size Reporting (BSR) method for informing a network device(110) of the network(100) a target Buffer Size Table (BST) used for a Logical Channel Group(LCG), and the BSR method comprises:
receiving one or more preset configurations of one or more BSTs from the network device(1 10), wherein t the one or more BSTs are candidate BSTs to be selected as the target BST to the LCG; and
in response to identifying the target BST used for the LCG, signalling an advanced BST indication to the network device(110), wherein the advanced BST indication is configured to record an advanced BST index and at least one of following information: a target LCID, and a target eLCID,
wherein the network device(110) queries a target Buffer Size (BS) range from a plurality of BS ranges in the target BST according to the received advanced BST indication, and the network device(110) grants a upload link (UL) resource for the LCG based on the target BS range, wherein the target BST is identified by the advanced BST index of the received advanced BST indication and the target BS range is identified by a BS index of the target BST.

10. The UE according to claim 9, wherein the advanced BST indication comprises a sub-header and a control element (CE),
wherein the sub-header is configured to record the target LCID, wherein the target LCID indicates a format of the advanced BST indication,
wherein the CE is configured to record a 8-bits LCG bitmap, one or more advanced BST indexes corresponding to the LCG bitmap, and one or more BS indexes corresponding to the one or more advanced BST indexes,
wherein the LCG bitmap comprises 8 bit values respectively corresponding to candidate LCGs, and each bit value of one candidate LCG indicates whether a corresponding advanced BST index exists to indicate the target BST of the said one candidate LCG,
wherein each of the advanced BST indexes indicates the target BST from the candidate BSTs.

11. The UE according to claim 9, wherein the advanced BST indication comprises a sub-header and a control element (CE),
wherein the sub-header is configured to record the target LCID and the target eLCID, wherein the target LCID indicates a format of the advanced BST indication, and the target eLCID indicates the candidate BSTs capable of being used as the target BST,
wherein the CE is configured to record a 8-bits LCG bitmap, one or more advanced BST indexes corresponding to the LCG bitmap, and one or more BS indexes corresponding to the one or more advanced BST indexes,
wherein the LCG bitmap comprises 8 bit values respectively corresponding to candidate LCGs, and each bit value of one candidate LCG indicates whether a corresponding advanced BST index exists to indicate the target BST of the said one candidate LCG,
wherein each of the advanced BST indexes indicates the target BST from the candidate BSTs.

12. The UE according to claim 9, wherein the advanced BST indication comprises a sub-header and a control element (CE),
wherein the sub-header is configured to record the target LCID, wherein the target LCID indicates a format of the advanced BST indication,
wherein the CE is configured to record a 8-bits LCG bitmap, a 8-bits BST bitmap, and one or more BS indexes corresponding to one or more activated candidate LCG,
wherein the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 LCGs, wherein each bit value of one BST index corresponding to an activated LCG indicates whether a legacy BST or the advanced BST is used for an activated corresponding LCG as the target BST.

13. The UE according to claim 9, wherein the advanced BST indication comprises a sub-header and a control element (CE),
wherein the sub-header is configured to record the target eLCID, wherein the target eLCID indicates a format of the advanced BST indication,
wherein the CE is configured to record a 8-bits LCG bitmap, a 8-bits BST bitmap, and one or more BS indexes corresponding to one or more activated candidate LCG,
wherein the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 LCGs, wherein each bit value of one BST index corresponding to an activated LCG indicates whether a legacy BST or the advanced BST is used for the activated corresponding LCG as the target BST.

14. The UE according to claim 9, wherein the advanced BST indication comprises a plurality of BSR MAC CEs, and each of the BSR MAC CEs comprises a sub-header and a control element (CE),
wherein the sub-header is configured to record the target LCID and the target eLCID, wherein the target LCID indicates a format of the advanced BST indication, and the target eLCID indicates the target BST from the candidate BSTs,
wherein the CE is configured to record an identification of the LCG(LCG ID) and 8-bits the BS index.

15. The UE according to claim 9, wherein the advanced BST indication comprises a sub-header and a control element (CE), and the CE comprises a plurality of sub-CEs,
wherein each of the sub-CEs is configured to record one reserved eLCID, a 8-bits LCG bitmap, a 8-bits BST bitmap, and one or more BS indexes corresponding to one or more activated candidate LCG, wherein the recorded reserved eLCID indicates one advanced BST from the candidate BSTs, wherein for each sub-CE,
the LCG bitmap comprises 8 bit values respectively corresponding to 8 candidate LCGs, and each bit value of one candidate LCG indicates whether the said one candidate LCG is activated,
wherein the BST bitmap comprises 8 bit values respectively corresponding to 8 BST indexes, and the 8 BST indexes are respectively corresponding to the 8 candidate LCGs, wherein each bit value of one BST index indicates whether a legacy BST or the advanced BST indicated by the eLCID of the each sub-CE is used for an activated corresponding LCG as the target BST.

16. The UE according to claim 9, wherein the advanced BST indication comprises a sub-header and a control element (CE), and the CE comprises a first sub-CE and a plurality of second sub-CEs,
wherein the first sub-CE is configured to record a 8-bits LCG bitmap and one or more BS indexes corresponding to one or more activated candidate LCG,
wherein the LCG bitmap comprises 8 bit values respectively corresponding to 8 candidate LCGs, and each bit value of one candidate LCG indicates whether the said one candidate LCG is activated, and the activated candidates LCG uses a legacy BST as the target BST,
wherein each of the second sub-CEs is configured to record one reserved eLCID, a 8-bits LCG bitmap and one or more BS indexes corresponding to one or more activated candidate LCG,
wherein the recorded reserved eLCID indicates one advanced BST from the candidate BSTs,
wherein the LCG bitmap comprises 8 bit values respectively corresponding to 8 candidate LCGs, and each bit value of one candidate LCG indicates whether the said one candidate LCG is activated, and the activated candidates LCG uses the said one advanced BST as the target BST.
